# EUROPEAN PATENT APPLICATION

(11) **EP 1 565 021 A1**
(43) Date of publication of application: **17.08.2005**
(21) Application number: 04723010.7
(22) Date of filing: 24.03.2004
(51) Int. Cl.: H04Q 7/38, H04L 12/56

(54) **COMMUNICATION TERMINAL DEVICE AND RADIO COMMUNICATION METHOD**

(30) Priority: 26.03.2003 JP 2003084709
(71) Applicant: MATSUSHITA ELECTRIC INDUSTRIAL CO., LTD., Kadoma-shi, Osaka 571-8501 (JP)
(72) Inventor: IOCHI, Hitoshi, Kanagawa 235-0023 (JP); SUZUKI, Hidetoshi, Kanagawa 239-0841 (JP); SEIDEL, Eiko, 64285 Darmstadt (DE)
(74) Representative: Grünecker, Kinkeldey, Stockmair & Schwanhäusser Anwaltssozietät
(86) International application number: PCT/JP2004/004035
(87) International publication number: WO 2004/086804

(57) **Abstract**

A transmission method selection section (223) selects either a first packet transmission method or a second packet transmission method. When the first packet transmission method is selected, an SRQ information generation section (224) generates SRQ (scheduling request) information based on the amount of data calculated by a data amount measuring section (221) and/or the retention time thereof, and the transmission power that can be used for packet data transmission calculated by a transmission power calculation section (222). On the other hand, when the secondpacket transmission method is selected, the SRQ information generation section (224) does not perform SRQ information generation, or generates SRQ information of a specific value for which packet data transmission is never permitted. By this means, in a radio communication system in which packet transmission is performed on uplinks and the packet transmission method is switched adaptively, the packet transmission method can be reported without transmitting a dedicated signal to a base station apparatus.

## Description

### Technical Field

The present invention relates to a communication terminal apparatus and radio communication method used in a radio communication system in which packet transmission is performed in uplinks.

### Background Art

A packet transmission method called HSDPA (High-Speed Downlink Packet Access) is known as a technology for transmitting packet data in a downlink (see patent document 1, for example).

With HSDPA, one physical channel is shared by a plurality of communication terminal apparatuses by means of time division. Therefore, a base station apparatus determines a destination communication terminal apparatus to which packet data is to be transmitted and packet data transmission parameters in predetermined time units (generally called "scheduling"). Scheduling is performed based on the amount of data the base station apparatus transmits to a communication terminal apparatus, permissible delay time, communication quality, and so forth, for example.

On the other hand, uplink packet transmission technologies are also currently being studied. The following two examples can be cited as such uplink packet transmission technologies.

The first is a transmission method whereby a base station apparatus performs scheduling in the same way as for a downlink, and determines a communication terminal apparatus for which packet transmission is permitted from among a plurality of communication terminal apparatuses (Base-station Controlled Scheduled Transmission: hereinafter referred to as "first packet transmission method").

With this method, scheduling information (data transmission permission) determined by a base station apparatus and a transmission parameter (transmission rate) for that time are transmitted to each communicating communication terminal apparatus, and each communication terminal apparatus transmits packet data to the base station apparatus based on the transmitted scheduling information and transmission parameter.

The second is a transmission method whereby a base station apparatus does not perform scheduling, and each communication terminal apparatus transmits packet data to the base station apparatus using a predetermined transmission parameter (transmission rate) (Autonomous Transmission: hereinafter referred to as "second packet transmission method").

An advantage of the first packet transmission method is that, for example, if the amount of increase of reception power permitted in a base station is assigned concentrated on communication terminal apparatuses for which there is a large amount of data, packet transmission can be performed at a high transmission rate. On the other hand, however, a drawback of the first packet transmission method is that, when a communication terminal apparatus performs soft handover (SHO) at the edge of a cell, an unexpected increase in reception power occurs in a base station apparatus that has not performed scheduling for that communication terminal apparatus, and reception quality degrades in other communication terminals.

An advantage of the second packet transmission method is that, since it is not necessary for scheduling to be performed by a base station, data transmission can be performed with little delay. On the other hand, however, a drawback of the second packet transmission method is that packet transmission can only ever be performed at a low transmission rate in order to suppress interference with other cells.

As the above two methods thus each have advantages and disadvantages, switching between the use of these methods adaptively according to conditions may be considered. For example, non-patent document 1 describes use of the second packet transmission method to suppress interference with other cells when a communication terminal apparatus is in the handover state, and use of the first packet transmission method usually (when not in the handover state).

Here, when the uplink packet transmission method is switched adaptively, which method a communication terminal apparatus is using to perform packet transmission must be reported successively from the communication terminal apparatus to the base station apparatus.

Conventionally, a dedicated signal is transmitted in order to report the packet transmission method from a communication terminal apparatus to a base station apparatus.

However, having a communication terminal apparatus generate and transmit a new signal for reporting the packet transmission method leads to problems of increased uplink interference, decreased system capacity, and higher communication terminal apparatus power consumption.

### Disclosure of Invention

It is an object of the present invention to provide a communication terminal apparatus and radio communication method capable of reporting a packet transmission method without transmitting a dedicated signal to a base station apparatus, decreasing system capacity, or increasing communication terminal apparatus power consumption.

This object is achieved by focusing on the fact that, in uplink packet transmission, a communication terminal apparatus transmits scheduling request information to a base station apparatus, and when a method is selected whereby a communication terminal apparatus performs packet transmission without a base station apparatus performing scheduling, and having that selection result reported to the base station apparatus by stopping transmission of scheduling request information or controlling the contents of scheduling request information.

### Brief Description of Drawings

FIG.1 is a block diagram showing the configuration of a base station apparatus according to Embodiment 1 of the present invention;
FIG.2 is a block diagram showing the configuration of a communication terminal apparatus according to Embodiment 1 of the present invention;
FIG.3 is a drawing showing an example of packet transmission method selection of a communication terminal apparatus according to Embodiment 1 of the present invention;
FIG. 4 is a drawing showing the relationship between a packet transmission method according to Embodiment 1 of the present invention and SRQ information transmission/reception;
FIG.5 is a block diagram showing the internal configuration of the scheduling section of a base station apparatus according to Embodiment 1 of the present invention;
FIG.6 is a drawing showing an example of a table held in the SRQ information generation section of a communication terminal apparatus according to Embodiment 2 of the present invention; and
FIG.7 is a block diagram showing the internal configuration of the scheduling section of a base station apparatus according to Embodiment 2 of the present invention.

### Best Mode for Carrying out the Invention

With reference now to the accompanying drawings, embodiments of the present invention will be explained in detail below.

### (Embodiment 1)

In Embodiment 1, a mode is described in which, when a communication terminal apparatus transmits packet data using predetermined transmission parameters independently of base station apparatus scheduling (the second packet transmission method), information requesting scheduling (hereinafter referred to as "SRQ information") is not transmitted to the base station apparatus. SRQ information is information indicating the amount of data, transmission rate, or usable transmission power requested by a communication terminal apparatus.

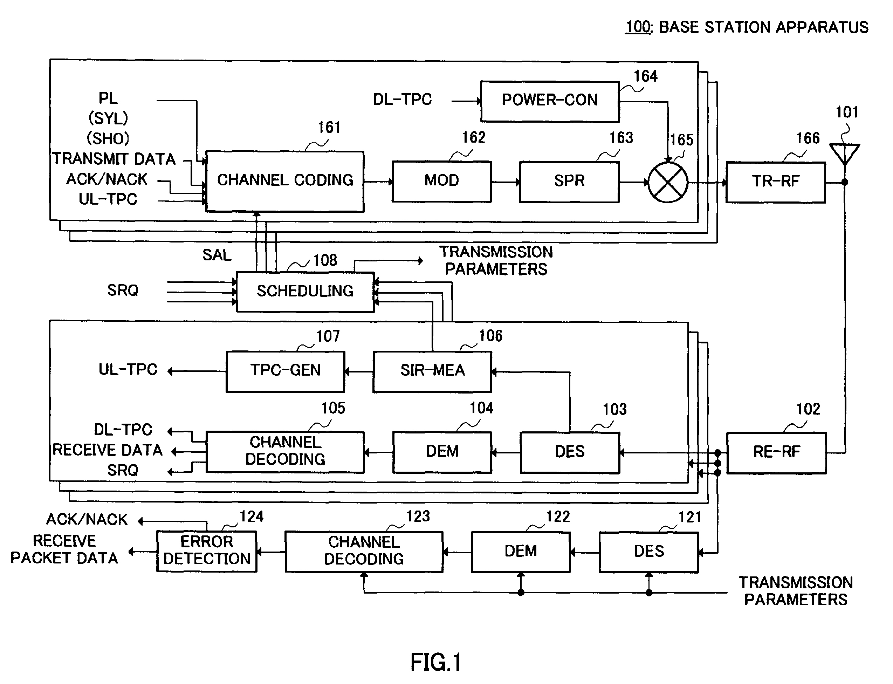

First, the operation of each component part of a base station apparatus 100 according to this embodiment will be described using the block diagram in FIG. 1.

A receiving radio section (RE-RF) 102 converts a radio frequency received signal received by an antenna 101 to a baseband digital signal, and outputs this signal to a despreading section (DES) 103 and despreading section (DES) 121.

A number of despreading sections 103 are provided equivalent to the number of communication terminal apparatuses that perform radio communication. Each despreading section 103 performs despreading processing on a received baseband signal, extracts a dedicated channel signal transmitted from a communication terminal apparatus, and outputs the extracted signal to a demodulation section (DEM) 104. Despreading section 103 also outputs to an SIR measuring section (SIR-MEA) 106 information indicating desired signal power obtained from a delay profile created at the time of despreading.

A number of demodulation sections 104 are provided equivalent to the number of communication terminal apparatuses that perform radio communication. Each demodulation section 104 performs demodulation processing on the output signal from despreading section 103, and outputs a demodulated signal to a channel decoding section 105.

Channel decoding section 105 performs decoding processing such as error correction decoding on the output signal from demodulation section 104, and extracts a downlink transmission power control command (hereinafter referred to as "DL-TPC") and SRQ information. Receive data is sent to a higher-level control station, the DL-TPC is sent to a transmission power control section (POWER-CON) 164, and SRQ information is sent to a scheduling section 108.

SRQ information is information indicating the transmit packet data transmission rate desired by a communication terminal apparatus, and is expressed as 1 to n (where n is a natural number not less than 2) for example. This transmission rate is decided based on the amount of packet data accumulated in a communication terminal apparatus and the retention time thereof, and the transmission power that can be used for packet data transmission in the communication terminal apparatus. In this embodiment, SRQ information is not transmitted from a communication terminal apparatus that has selected the second packet transmission method.

A number of SIR measuring sections 106 are provided equivalent to the number of communication terminal apparatuses that perform radio communication. Each SIR measuring section 106 extracts interference wave power from the desired signal power spread value, calculates the ratio between desired signal power and interference wave power (hereinafter referred to as "SIR"), and outputs information indicating the SIR to a TPC generation section (TPC-GEN) 107 and scheduling section 108.

A number of TPC generation sections 107 are provided equivalent to the number of communication terminal apparatuses that perform radio communication. Each TPC generation section 107 generates an uplink transmission power control command (hereinafter referred to as "UL-TPC") that specifies an increase or decrease of uplink transmission power in accordance with the size relationship between the uplink reception SIR and target SIR, and outputs the UL-TPC to a channel coding section 161.

Scheduling section 108 determines a communication terminal apparatus for which packet data transmission is permitted based on SRQ information from each communication terminal apparatus and the SIR, and determines the relevant packet data transmission parameters (coding rate for error correction coding, M-ary modulation number, spreading ratio, transmission power, and so forth) (i.e. performs scheduling). Then scheduling section 108 sends information indicating the scheduling result (hereinafter referred to as "SAL information") to channel coding section 161, and outputs information indicating the transmission parameters to despreading section 121, a demodulation section (DEM) 122, and a channel decoding section 123. Base station apparatus 100 always transmits SAL information to a communication terminal apparatus for which packet data transmission is permitted, but need not transmit SAL information to other communication terminal apparatuses. The processing of scheduling section 108 will be described in detail later herein.

Despreading section 121 performs despreading processing on a received baseband signal using the spreading ratio indicated by transmission parameter information from scheduling section 108, extracts a packet signal transmitted from the communication terminal apparatus, and outputs the extracted packet signal to demodulation section 122.

Demodulation section 122 performs demodulation processing on the packet signal output from despreading section 121 using the M-ary modulation number indicated by transmission parameter information from scheduling section 108, and outputs a demodulated signal to channel decoding section 123.

Channel decoding section 123 performs decoding processing such as error correction decoding on the demodulated signal output from demodulation section 122 using the coding rate indicated by transmission parameter information from scheduling section 108, extracts receive packet data, and outputs the receive packet data to an error detection section 124.

Error detection section 124 performs error detection on the receive packet data output from channel decoding section 123. Then, if an error is not detected, error detection section 124 outputs the receive packet data to a higher-level station, and also outputs an ACK signal indicating that detection has been performed correctly to channel coding section 161. On the other hand, if an error is detected, error detection section 124 outputs a NACK signal indicating that detection could not be performed correctly to channel coding section 161.

A number of channel coding sections 161 are provided equivalent to the number of communication terminal apparatuses that perform radio communication. Each channel coding section 161 multiplexes a pilot signal (PL), ACK/NACK, UL-TPC, and SAL information with transmit data transmitted by a dedicated channel to the relevant communication terminal apparatus, performs error correction coding processing on the multiplexed data, and outputs the signal obtained by means of coding processing to a modulation section (MOD) 162. Information indicating the system load (hereinafter referred to as "SYL information") and information indicating a soft handover state or otherwise (hereinafter referred to as "SHO information") is multiplexed with the transmit data by a higher-level apparatus such as a radio network control apparatus, but a base station apparatus only handles transmit data and does not recognize its contents, and is therefore unaware of these items of information. SYL information is generated from the system load in at least one base station apparatus, and possible indicators of system load include (1) the sum of reception power and thermal noise power in a base station apparatus, (2) the number of communicating communication terminal apparatuses, and (3) the sum of transmission rates in use.

A number of modulation sections 162 are provided equivalent to the number of communication terminal apparatuses that perform radio communication. Each modulation section 162 performs modulation processing on the output signal from channel coding section 161, and outputs a modulated signal to a spreading section (SPR) 163.

A number of spreading sections 163 are provided equivalent to the number of communication terminal apparatuses that perform radio communication. Each spreading section 163 performs spreading processing on the output signal from modulation section 162 and outputs the resulting signal to an amplification section 165.

A number of transmission power control sections 164 are provided equivalent to the number of communication terminal apparatuses that perform radio communication. Each transmission power control section 164 controls the amount of amplification of amplification section 165 in accordance with the DL-TPC. A number of amplification sections 165 are provided equivalent to the number of communication terminal apparatuses that perform radio communication. Each amplification section 165 amplifies the transmission power of the output signal from spreading section 163 in accordance with control by transmission power control section 164, and outputs the amplified signal to a transmitting radio section (TR-RF) 166.

Transmitting radio section 166 up-converts the output signal from amplification section 165 to radio frequency, and performs radio transmission of the up-converted signal from antenna 101.

This concludes the description of the configuration of a base station apparatus 100 according to this embodiment.

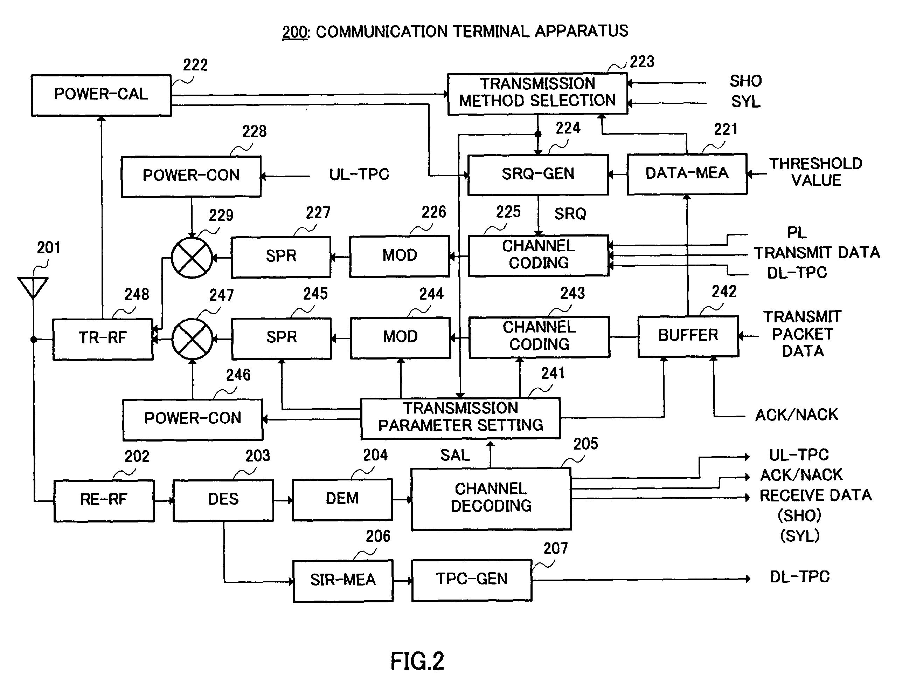

Next, the operation of each component part of a communication terminal apparatus 200 according to this embodiment will be described using the block diagram in FIG.2.

A receiving radio section (RE-RF) 202 converts a radio frequency received signal received by an antenna 201 to a baseband digital signal, and outputs this signal to a despreading section (DES) 203.

Despreading section 203 performs despreading processing on the received baseband signal, extracts a dedicated channel signal transmitted from the base station apparatus, and outputs the extracted signal to a demodulation section (DEM) 204. Despreading section 203 also outputs to an SIR measuring section (SIR-MEA) 206 information indicating desired signal power obtained from a delay profile created at the time of despreading.

Demodulation section 204 performs demodulation processing on the output signal from despreading section 203, and outputs a demodulated signal to a channel decoding section 205. Channel decoding section 205 performs decoding processing such as error correction decoding on the output signal from demodulation section 204, and extracts receive data, SAL information, a UL-TPC, and ACK/NACK. Also, SHO information and SYL information are extracted from the receive data. SAL information is sent to a transmission parameter setting section 241, the UL-TPC is sent to a transmission power control section (POWER-CON) 228, ACK/NACK is sent to a buffer 242, and SHO information and SYL information are sent to a transmission method selection section 223.

SIR measuring section 206 calculates interference wave power from the desired signal power spread value, calculates the SIR from the desired signal power and interference wave power, and outputs a signal indicating the SIR to a TPC generation section (TPC-GEN) 207.

TPC generation section 207 generates a DL-TPC that specifies an increase or decrease of downlink transmission power in accordance with the size relationship between the downlink reception SIR and target SIR, and outputs the DL-TPC to a channel coding section 225.

A data amount measuring section (DATA-MEA) 221 measures the amount of data accumulated in buffer 242 described later herein and the retention time thereof, and outputs the measurement results to an SRQ information generation section (SRQ-GEN) 224. Data amount measuring section 221 also determines whether or not the amount of data is greater than or equal to a predetermined threshold value, and whether or not the retention time of that data is greater than or equal to a predetermined threshold value, and outputs information indicating the determination results to transmission method selection section 223. If the aforementioned threshold values are controlled adaptively according to the type of service, it is possible to secure quality on a service-by-service basis and reduce the frequency of transmission of SRQ information.

A transmission power calculation section (POWER-CAL) 222 subtracts the transmission power of all signals transmitted by a transmitting radio section (TR-RF) 248 described later herein from a predetermined transmission power maximum value, calculates the transmission power that can be used for packet data transmission, and outputs the calculation result to SRQ information generation section 224. Transmission power calculation section 222 also determines whether or not the transmission power that can be used for packet data transmission is greater than or equal to a predetermined threshold value, and outputs information indicating the determination result to transmission method selection section 223. Whether or not packet data power and/or SRQ information power is to be taken into consideration in the calculation of usable transmission power can be decided as appropriate according to the system.

Based on at least one of SHO information, SYL information, data amount measuring section 221 determination results, and transmission power calculation section 222 determination results, transmission method selection section 223 selects either the first packet transmission method or the second packet transmission method, and outputs information indicating the selected packet transmission method to SRQ information generation section 224 and transmission parameter setting section 241. The first packet transmission method and second packet transmission method may be implemented as different operations in a single algorithm. For example, there may be a difference as to whether or not a base station performs scheduling in a single algorithm. The actual processing carried out by transmission method selection section 223 will be described later herein.

If the first packet transmissionmethod is selected, SRQ information generation section 224 generates SRQ information based on the amount of data measured by data amount measuring section 221 and/or the retention time thereof, and the transmission power that can be used for packet data transmission calculated by transmission power calculation section 222, and outputs the generated SRQ information to channel coding section 225. On the other hand, if the second packet transmission method is selected, SRQ information generation section 224 does not perform SRQ information generation.

Channel coding section 225 multiplexes the DL-TPC and SRQ information, performs error correction coding processing on the multiplexed data, and outputs the signal obtained by means of coding processing to a modulation section (MOD) 226.

Modulation section 226 performs modulation processing on the output signal from channel coding section 225, and outputs a modulated signal to a spreading section (SPR) 227. A number of spreading sections 227 are provided equivalent to the number of communication terminal apparatuses that perform radio communication. Spreading section 227 performs spreading processing on the output signal from modulation section 226 and outputs the resulting signal to an amplification section 229.

Transmission power control section 228 controls the amount of amplification of amplification section 229 in accordance with the UL-TPC. Amplification section 229 amplifies the transmission power of the output signal from spreading section 227 in accordance with control by transmission power control section 228, and outputs the amplified signal to transmitting radio section 248.

When the first packet transmission method has been selected, transmission parameter setting section 241 outputs transmission parameters indicated by SAL information to buffer 242, a channel coding section 243, modulation section (MOD) 244, spreading section (SPR) 245, and transmission power control section (POWER-CON) 246. As a result, communication terminal apparatus 200 transmits packet data based on base station apparatus 100 scheduling. On the other hand, if the second packet transmission method has been selected, transmission parameter setting section 241 outputs predetermined transmission parameters to buffer 242, channel coding section 243, modulation section 244, spreading section 245, and transmission power control section 246. As a result, communication terminal apparatus 200 transmits packet data independently of base station apparatus 100 scheduling. Transmission parameter setting section 241 may set parameters indicated by SAL information at all times, or, when transmission is possible at a lower transmission rate than that for which the amount of data in the buffer is specified, for example, maymake settings such that the transmission power and transmission rate are lower than in the case of the parameters indicated by SAL information by adding other factors. Also, when the second packet transmission method is selected, transmission parameters may always be fixed values, or may be specified by a higher-level station at the start of communication or during communication. Alternatively, a decision may be made based on SAL information from the base station apparatus. For example, it is possible to continue using the last SAL information extracted, to use SAL information with the lowest rate within a predetermined period, to average transmission rates determined from SAL information over a predetermined period, or to lower the transmission rate according to the time since SAL information was extracted.

Buffer 242 temporarily stores transmit packet data, and outputs packet data specified by transmission parameter setting section 241 to channel coding section 243 at the specified time. If ACK is input at this time, buffer 242 discards the transmitted packet data and outputs new packet data. If NACK is input, on the other hand, buffer 242 re-outputs the previously transmitted packet data.

Channel coding section 243 performs error correction coding processing on packet data using the coding rate specified by transmission parameter setting section 241, and outputs the packet signal obtained by means of coding processing to modulation section 244.

Modulation section 244 performs modulation processing on the packet signal output from channel coding section 243 using the M-ary modulation number specified by transmission parameter setting section 241, and outputs a modulated packet signal to spreading section 245.

Spreading section 245 performs spreading processing on the packet signal output from modulation section 244 using the spreading ratio specified by transmission parameter setting section 241, and outputs the spread packet signal to an amplification section 247.

Transmission power control section 246 controls the amount of amplification of amplification section 247 in accordance with the direction from transmission parameter setting section 241. Amplification section 247 amplifies the transmission power of the packet signal output from spreading section 245 in accordance with control by transmission power control section 246, and outputs the amplified signal to transmitting radio section 248.

Transmitting radio section 248 up-converts the output signals from amplification section 247 and amplification section 229 to radio frequency, and performs radio transmission of the up-converted signals from antenna 201.

This concludes the description of the configuration of a communication terminal apparatus 200 according to this embodiment.

Next, the actual processing carried out by transmission method selection section 223 will be described. Transmission method selection section 223 selects either the first packet transmission method or the second packet transmission method based on at least one of SHO information, SYL information, data amount measuring section 221 determination results, and transmission power calculation section 222 determination results.

The following cases may be cited, for example. (1) when transmission method selection section 223 determines whether or not the local station (communication terminal apparatus 200) is in the handover state, and if it is in the handover state, selects the second packet transmission method in order to suppress an increase in reception power that cannot be predicted by the base station apparatus. (2) Transmission method selection section 223 judges whether or not the communication cell system load is greater than a predetermined value based on SYL information, and if the system load is greater than the predetermined value, selects the second packet transmission method in order to prevent reception power in the cell base station apparatus from exceeding the permissible value. (3) Transmission method selection section 223 assesses the amount of data based on the determination result of data amount measuring section 221, and if the amount of data in buffer 242 is less than a predetermined value, and/or the retention time is shorter than a predetermined value, selects the second packet transmission method in order to increase overall system throughput since there is no need to send packet data at a high transmission rate. (4) Transmission method selection section 223 judges the amount of transmission power that can be used for packet data transmission based on the determination result of transmission power calculation section 222, and if the transmission power margin is less than or equal to a predetermined value, selects the second packet transmission method since packet data cannot be sent at a high transmission rate.

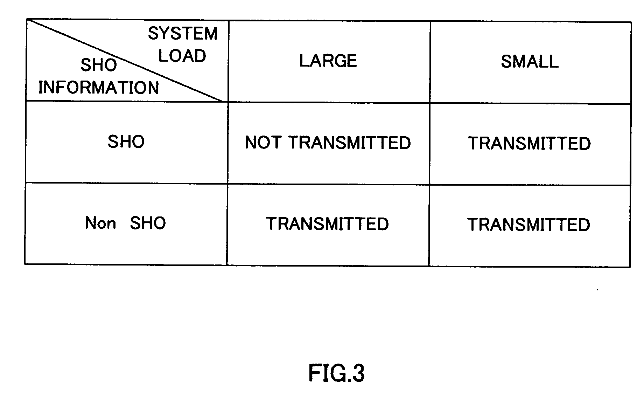

Transmission method selection section 223 can also select the packet transmission method by combining above criteria (1) through (4). For example, if the system load of the cell of the base station apparatus with which the communication terminal apparatus is communicating is small, packet data can still be transmitted at a high transmission rate even if the communication terminal apparatus is in the handover state, and therefore, as shown in FIG.3, transmission method selection section 223 selects the second packet transmission method and does not transmit SRQ information only if the communication terminal apparatus is in the handover state and the system load is greater than a predetermined value.

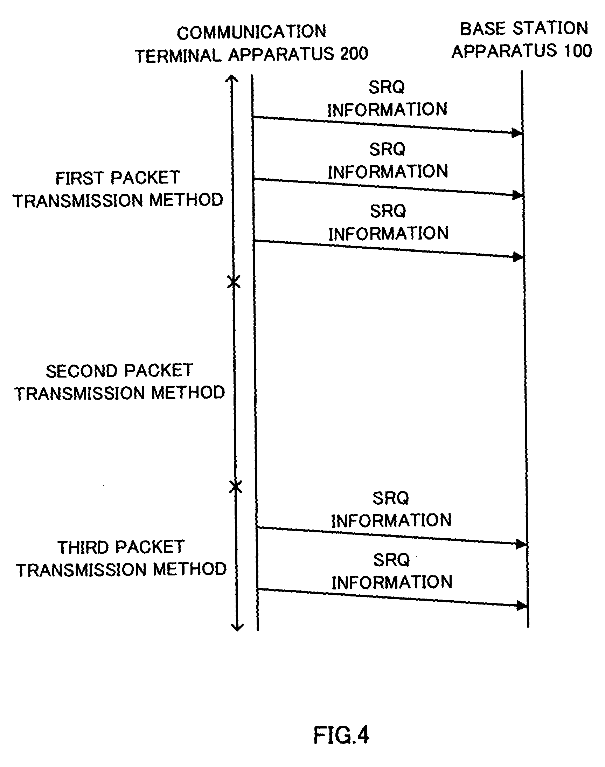

As a result of the above, as shown in FIG.4, SRQ information is transmitted to base station apparatus 100 when communication terminal apparatus 200 has selected the first packet transmission method, and is not transmitted to base station apparatus 100 when communication terminal apparatus 200 has selected the second packet transmission method.

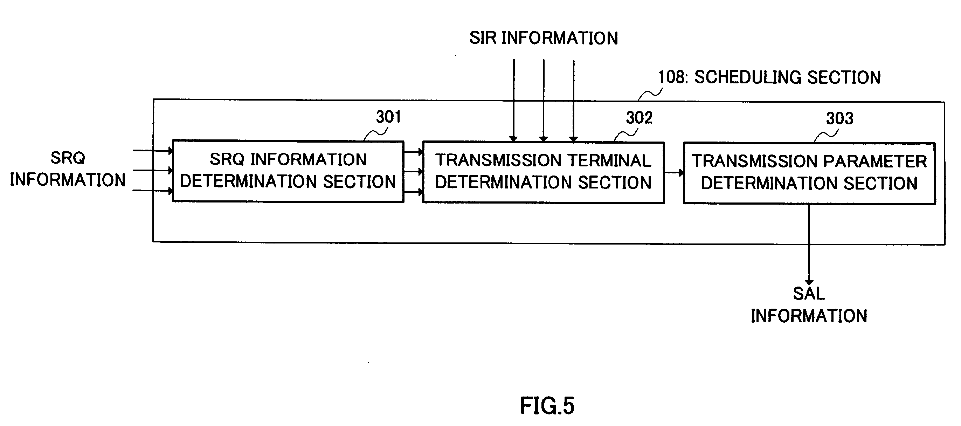

Next, the processing of scheduling section 108 will be described in detail using FIG.5. FIG.5 is a block diagram showing the internal configuration of scheduling section 108.

Scheduling section 108 is mainly composed of an SRQ information determination section 301, a transmission terminal determination section 302, and a transmission parameter determination section 303.

SRQ information determination section 301 determines whether or not SRQ information has been transmitted from each communication terminal apparatus within a predetermined time, establishes correspondence between SRQ information whose transmission has been confirmed and a communication terminal apparatus that transmitted this SRQ information, and outputs the results to transmission terminal determination section 302.

Transmission terminal determination section 302 determines, from among communication terminal apparatuses that have transmitted SRQ information, a communication terminal apparatus for which packet data transmission is permitted based on the relevant SRQ information and SIR information. A possible determination method is, for example, to read the transmission power margin of each communication terminal apparatus from SRQ information, find the transmission rate at which error-free reception is possible for each communication terminal apparatus based on this and the SIR, and permit packet data transmission to the communication terminal apparatus with the highest transmission rate.

Transmission parameter determination section 303 determines packet data transmission parameters (coding rate for error correction coding, M-ary modulation number, spreading ratio, transmission power, and so forth) based on SRQ information from a communication terminal apparatus for which packet data transmission has been permitted, and outputs SAL information to the channel coding section 161 corresponding to the communication terminal apparatus for which packet data transmission has been permitted.

Thus, according to this embodiment, by controlling execution/halting of SRQ information transmission by a communication terminal apparatus so that SRQ information is transmitted to a base station apparatus when the first packet transmission method is selected, and SRQ information is not transmitted to a base station apparatus when the second packet transmission method is selected, the packet transmission method can be reported without transmitting a dedicated signal to the base station apparatus. Also, since SRQ information is not transmitted to the base station apparatus when the second packet transmission method is selected, the amount of interference imposed on the system can be reduced. Moreover, since communication terminal apparatus transmission power is reduced, battery depletion can be suppressed.

### (Embodiment 2)

In Embodiment 2, a mode is described in which, when a communication terminal apparatus transmits packet data using predetermined transmission parameters independently of base station apparatus scheduling (the second packet transmission method), SRQ information of a specific value for which packet data transmission is never permitted is transmitted.

In Embodiment 2, the configurations of a base station apparatus and a communication terminal apparatus are the same as those of Embodiment 1 shown in FIG.1 and FIG.2, and only the internal configuration of scheduling section 108 of a base station apparatus and the operation of SRQ information generation section 224 of a communication terminal apparatus differ.

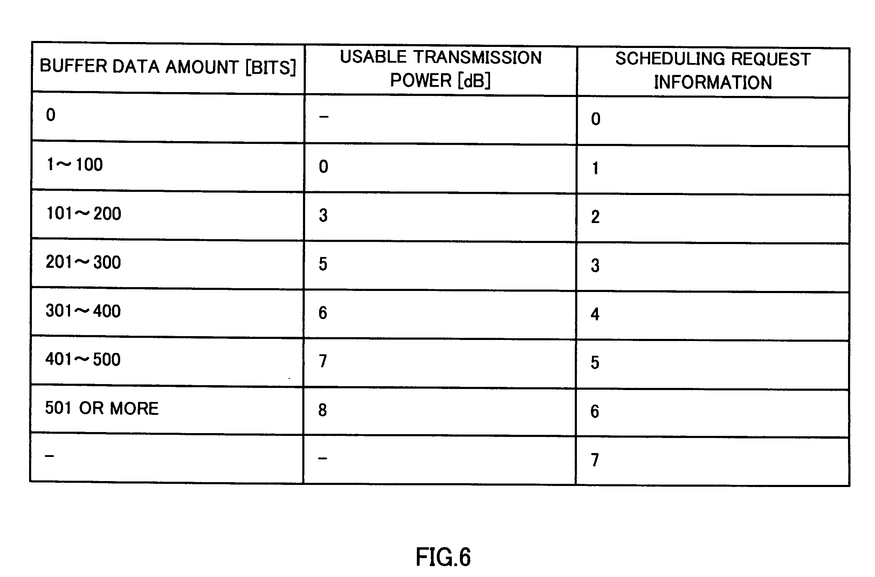

SRQ information generation section 224 of this embodiment holds a table indicating the relationship between the amount of data in buffer 242, usable transmission power, and SRQ information, as shown in FIG.6. Usable transmission power is expressed in decibels (dB) as a ratio to the value calculated by transmission power calculation section 222.

When the first packet transmission method is selected, SRQ information generation section 224 generates SRQ information in accordance with the table in FIG.6. For example, if the amount of data in buffer 242 is 350 bits and the usable transmission power is 3 dB, SRQ information "2" corresponding to the smaller of these values is generated.

On the other hand, when the second packet transmission method is selected, SRQ information generation section 224 uniformly generates SRQ information of a specific value for which packet data transmission is never permitted. Here, possible specific values include a value indicating that the transmission rate at which transmission is possible is the lowest or a value indicating that the amount of packet data in the buffer is the least (in FIG.6, "0"), or a value not used as SRQ information in the table (in FIG.6, "7").

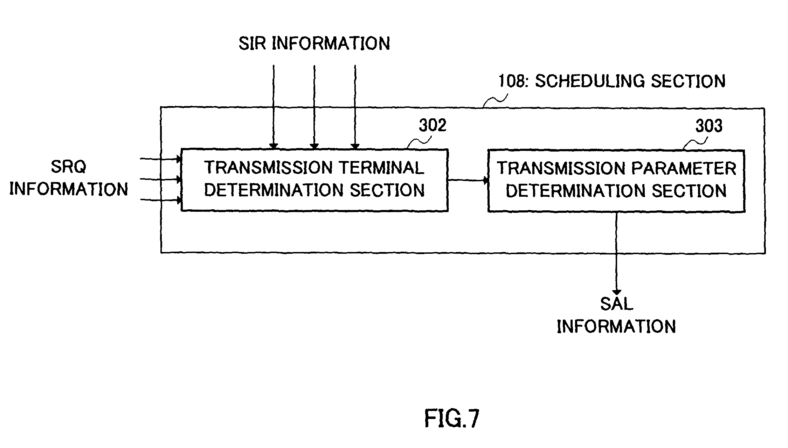

As compared with Embodiment 1, scheduling section 108 of this embodiment does not require SRQ information determination section 301, as shown in FIG.7.

Transmission terminal determination section 302 determines, from among all communicating communication terminal apparatuses, a communication terminal apparatus for which packet data transmission is permitted based on SRQ information and SIR information. In this case, packet data transmission is never permitted to a communication terminal apparatus that transmits SRQ information of a specific value.

Thus, according to this embodiment, by controlling the contents of SRQ information transmission by a communication terminal apparatus so that SRQ information in accordance with a table is transmitted to a base station apparatus when the first packet transmission method is selected, and SRQ information of a specific value for which packet data transmission is never permitted is transmitted to a base station apparatus when the second packet transmission method is selected, the packet transmission method can be reported without transmitting a dedicated signal to the base station apparatus.

In the above embodiments, a case has been described in which a base station apparatus performs scheduling based on SIR information, but the present invention is not limited to this, and scheduling may also be performed based on power before spreading, power after spreading, and so forth. Also, with the present invention, there may be a plurality of communication terminal apparatuses for which a base station apparatus permits transmission simultaneously.

Furthermore, in the above embodiments, a case has been described in which a communication terminal apparatus selects either a first packet transmission method or a second packet transmission method, but it is also possible to select halting of packet data transmission when there is no data at all, for example. When packet transmission is halted, a communication terminal apparatus does not, of course, transmit SRQ information to a base station apparatus.

As is clear from the above description, according to the present invention, by controlling execution/halting of scheduling request information transmission, or controlling the contents of scheduling request information, according to the packet transmission method selected by a communication terminal apparatus, the packet transmission method can be reported without transmitting a dedicated signal to a base station apparatus.

This application is based on Japanese Patent Application No.2003-084709 filed on March 26, 2003, the entire content of which is expressly incorporated by reference herein.

### Industrial Applicability

The present invention is applicable to a communication terminal apparatus used in a radio communication system in which packet transmission is performed in uplinks.

## Claims

1. A communication terminal apparatus used in a radio communication system in which packet transmission is performed in an uplink, and switching is performed adaptively between a first packet transmission method whereby a communication terminal apparatus performs packet transmission in accordance with base station apparatus scheduling and a second packet transmission method whereby a communication terminal apparatus performs packet transmission without a base station apparatus performing scheduling, said communication terminal apparatus comprising:
a transmission method selection section that selects either said first or second packet transmission method;
a scheduling request information generation section that generates scheduling request information used for scheduling by said base station apparatus when said first packet transmission method is used, and differentiates between packet transmission methods according to a method of generation of said scheduling request information; and
a transmitting section that transmits said scheduling request information to a base station apparatus.

2. The communication terminal apparatus according to claim 1, wherein said scheduling request information generation section halts generation of said scheduling information when said second packet transmission method is used.

3. The communication terminal apparatus according to claim 1, wherein said scheduling request information generation section generates scheduling request information of a specific value for which packet data transmission is never permitted when said second packet transmission method is used.

4. The communication terminal apparatus according to claim 1, wherein said transmission method selection section selects said first packet transmission method when a handover state is not in effect.

5. The communication terminal apparatus according to claim 1, wherein said transmission method selection section selects said first packet transmission method when system load in a communicating base station apparatus is less than or equal to a predetermined threshold value.

6. The communication terminal apparatus according to claim 1, wherein said transmission method selection section selects said second packet transmission method when an amount of packet data in a buffer is less than or equal to a predetermined threshold value.

7. The communication terminal apparatus according to claim 1, wherein said transmission method selection section selects said second packet transmission method when retention time of a packet in a buffer is less than or equal to a predetermined threshold value.

8. The communication terminal apparatus according to claim 1, wherein said transmission method selection section selects said second packet transmission method when transmission power for transmitting packet data is less than or equal to a predetermined threshold value.

9. A base station apparatus used in a radio communication system in which packet transmission is performed in an uplink, and switching is performed adaptively between a first packet transmission method whereby a communication terminal apparatus performs packet transmission in accordance with base station apparatus scheduling and a second packet transmission method whereby a communication terminal apparatus performs packet transmission without a base station apparatus performing scheduling, said base station apparatus comprising:
a transmission terminal determination section that determines a communication terminal apparatus for which packet data transmission is permitted based on scheduling request information transmitted from each communication terminal apparatus within a predetermined time; and
a transmission parameter determination section that determines a packet data transmission parameter based on scheduling request information from a communication terminal apparatus for which packet data transmission has been permitted.

10. The base station apparatus according to claim 9, further comprising a scheduling information determination section that determines whether or not scheduling request information from each communication terminal apparatus has been transmitted within a predetermined time, wherein said transmission terminal determination section determines a communication terminal apparatus for which packet data transmission is permitted from among communication terminal apparatuses that have transmitted said scheduling request information.

11. The base station apparatus according to claim 9, wherein said transmission terminal determination section determines a communication terminal apparatus for which packet data transmission is permitted from among communication terminal apparatuses excluding communication terminal apparatuses that have transmitted scheduling request information of a specific value for which packet data transmission is never permitted.

12. A radio communication method used in a radio communication system in which packet transmission is performed in an uplink, and switching is performed adaptively between a first packet transmission method whereby a communication terminal apparatus performs packet transmission in accordance with base station apparatus scheduling and a second packet transmission method whereby a communication terminal apparatus performs packet transmission without a base station apparatus performing scheduling, wherein:
said communication terminal apparatus comprises:
a step of selecting either said first or second packet transmission method;
a step of generating scheduling request information used for scheduling by said base station apparatus when said first packet transmission method is used, and differentiating between packet transmission methods according to a method of generation of said scheduling request information; and
a step of transmitting said scheduling request information to a base station apparatus;
and said base station apparatus comprises:
a step of performing scheduling based on said scheduling request information transmitted from said communication terminal apparatus; and
a step of transmitting a transmission parameter to a communication terminal apparatus for which packet transmission is permitted.

## Amended claims

### Amended claims under Art. 19.1 PCT

**2.** (Amended) The communication terminal apparatus according to claim 1, wherein said scheduling request information generation section halts generation of said scheduling request information when said second packet transmission method is used.

**8.** (Amended) The communication terminal apparatus according to claim 1, wherein said transmission method selection section selects said second packet transmission method when a margin of transmission power for transmitting packet data is less than or equal to a predetermined threshold value.
